# EUROPEAN PATENT APPLICATION

(11) **EP 1 445 929 A1**
(43) Date of publication of application: **11.08.2004**
(21) Application number: 03290322.1
(22) Date of filing: 10.02.2003
(51) Int. Cl.: H04M 11/06, H04L 27/26

(54) **Memory management for a digital subscriber line telecommunication device**

(71) Applicant: ALCATEL, 75008 Paris (FR)
(72) Inventor: Van Hoogenbemt, Stefaan Margriet Albert, 2800 Mechelen (BE)
(74) Representative: Plas, Axel

(57) **Abstract**

A Digital Subscriber Line [DSL] telecommunication device comprising at least one common memory (CM) that is shared between circuits (FFT, Demapper) of the downstream path and corresponding circuits (Mapper, IFFT) of the upstream path. The shared or common memory (CM) advantageously replaces the known two distinct memories (DM, UM) generally used, one for the downstream path and the other for the upstream path. The single common memory (CM) is particularly adapted to Very High Speed Digital Subscriber Line [VDSL-, VDSL or VDSL+] devices where the two downstream frequency ranges (DF1, DF2) are separated by an upstream frequency range (UF1); and where a second upstream frequency range (UF2) may exist. The size of the common memory shared by the fourth circuits is slightly larger (2800 carriers of 16 bits) than one (2048 carriers of 16 bits) of the known two memories interfacing each only two circuits of a same path. However, the size of this common memory is smaller than the sum (2 x 2048 carriers of 16 bits) of these two distinct memories.

## Description

The present invention relates to a Digital Subscriber Line [DSL] telecommunication device with a first path for transferring data in a first direction and a second path for transferring data in a second direction opposite to said first direction, said telecommunication device being adapted to operate according to a frequency spectra comprising a plurality of ranges of frequencies for first data transferred in said first direction and at least one range of frequencies for second data transferred in said second direction, two distinct ranges of frequencies for said first data being separated by a range of frequencies for said second data, and said telecommunication device including memory means interfacing circuits of said paths and used to latch data during their transfer between said circuits.

Such a Digital Subscriber Line [DSL] telecommunication device is a classical circuit generally known in the art. The DSL device comprises separated downstream and upstream paths. Each path is constituted by a cascade coupling of circuits, generally processors, alternating with memories. The memories are buffers or data storage means adapted to store the first, e.g. the downstream, and the second, e.g. the upstream, data while it is transferred between the processors. Because of standardization requirements, the frequencies of the downstream data of a DSL device belong to two distinct frequency ranges or bands, whilst the frequencies of the upstream data belong to either one or two frequency ranges according to the fact that, for instance, a Very High Speed Digital Subscriber Line protocol VDSL- or another Very High Speed Digital Subscriber Line protocol VDSL or VDSL+ is used. The standardization also requires that the frequency range of the upstream data is situated in-between the two frequency ranges of the downstream data, the second frequency range, if any, of the upstream data being situated above the second frequency range of the downstream data, as will become clear from the description later.

This distribution of frequencies in the frequency domain has a direct consequence on the storage of the data in the memories in both the downstream and the upstream paths. It can be seen as the memories need to cover from the lowest frequency of the lowest frequency range up to the highest frequency of the highest frequency range, and this in both directions. The size of the memories is thereby over-dimensioned, at least because, in the downstream direction, it covers not only the two frequency ranges of the downstream data, but also at least the frequency range of the upstream data situated in-between these two downstream frequency ranges.

Using two distinct memories each for a distinct one of the two frequency ranges of, e.g., the downstream data is not a solution leading to cost reduction and to save space on the electronic chip.

An object of the present invention is to provide a DSL telecommunication device of the above known type but wherein the size of the memory means is optimized, thereby reducing the cost of the chip because of using less silicon.

According to the invention, this object is achieved due to the fact that said telecommunication device comprises a common memory adapted both to store first data transferred between circuits of said first path and to store second data transferred between circuits of said second path.

In this way, the different memories used to latch first data of the first, e.g. the downstream, path and second data of the second, e.g. the upstream, path are replaced by the single common memory. This is possible because first data and second data are not overlapping in the frequency domain, a common memory may thus be used. This common memory is accessed both by circuits of the first path and by circuits of the second path.

In a preferred embodiment, the present invention is characterized in that said common memory is shared by circuits of said first path and by corresponding circuits of said second path.

The present invention is further characterized in that said Digital Subscriber Line telecommunication device comprises a plurality of common memories, each common memory of said plurality interfacing two circuits of said first path and two corresponding circuits of said second path.

In this way, at almost each stage of the data process in the paths, it is possible to use a memory that is common for both the second and the first data, each circuit or processor using only a part of this shared common memory.

Since the die or chip size is thereby even more reduced, the number of lines per chip can be increased and the production cost reduced.

In more detail, the present invention is further characterized in that said common memory has a first input connected to an output of a first circuit of said downstream path, has a first output connected to an input of a second circuit of said downstream path, has a second input connected to an output of a third circuit of said upstream path, and has a second output connected to an input of a fourth circuit of said upstream path.

It will be prove below that the size of the common memory shared by these fourth circuits is slightly larger than one of the above two memories interfacing only two circuits. However, the size of this common memory is smaller than the sum of the above two memories.

A further characterizing embodiment of the present invention is that said first input and said second output are associated to distinct ends of said common memory.

The delay shift between upstream data and downstream data is such that, by latching these data at distinct ends of the common memory, the data will not overlap in the time domain within the common memory.

In a preferred embodiment, the present invention is further characterized in that said common memory has a first input connected to an output of a Fast-Fourier-Transform circuit of said downstream path, has a first output connected to an input of a Demapper circuit of said downstream path, has a second input connected to an output of a Mapper circuit of said upstream path, and has a second output connected to an input of an Inverse-Fast-Transform-Transform circuit of said upstream path.

This particular common memory is thus shared between a Fast-Transform-Transform circuit and a Demapper/ Viterbi circuit in the downstream path, and a Mapper/ Viterbi circuit and an Inverse-Fast-Transform-Transform circuit in the upstream path.

Further characterizing embodiments of the present telecommunication device are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a Digital Subscriber Line [DSL] telecommunication device as known in the prior art;
Fig. 2 shows frequency ranges used in the downstream path and in the upstream path of the DSL telecommunication device of Fig. 1; and
Fig. 3 represents a common memory according to the invention and shared between circuits of the downstream path and corresponding circuits of the upstream path of the DSL telecommunication device of Fig. 1.

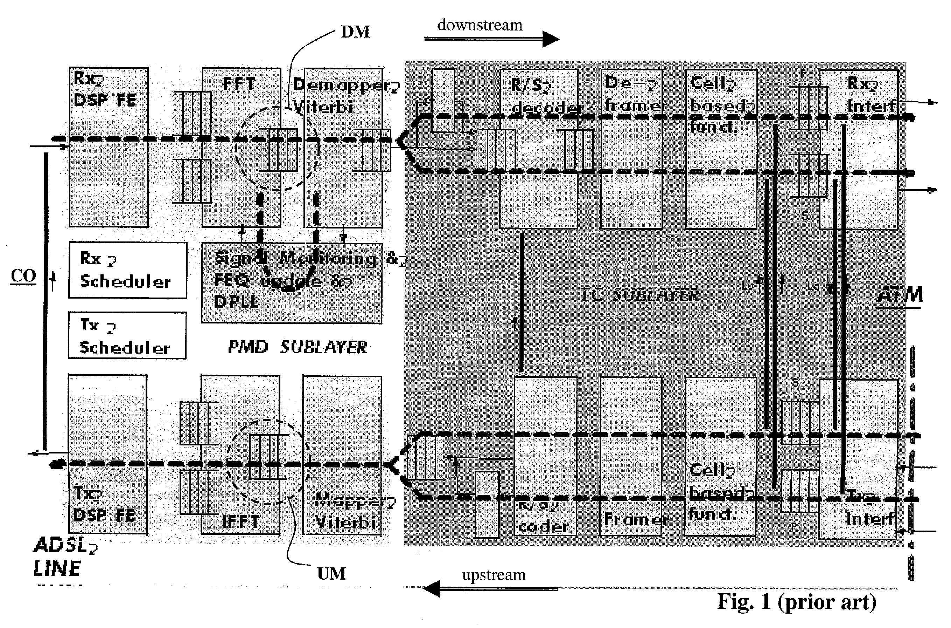

The telecommunication device shown at Fig. 1 is a known digital subscriber line [DSL] telecommunication device of the type Asymmetric Digital Subscriber Line [ADSL] or, preferably Very High Speed Digital Subscriber Line [VDSL-, VDSL or VDSL+]. Such a DSL device comprises a first or downstream path and a second or upstream path coupled between an ADSL line connected to a Central Office CO and an Asynchronous Transfer Mode receiver ATM. The downstream path is mainly constituted by the cascade connection of a Receive Digital Signal Processor Front End Rx_DSP_FE, first downstream memory means, a Fast-Transform-Transform circuit FFT, second downstream memory means DM, a Demapper/ Viterbi circuit, third downstream memory means, a R/S Decoder, fourth downstream memory means, a Deframer, a Cell based functional circuit, fifth downstream memory means and a Receiver Rx_interface. The upstream path is mainly constituted by corresponding circuits which are a Transmitter Tx_interface, first upstream memory means, a Cell based functional circuit, a Framer, a R/S Coder, second upstream memory means, a Mapper/ Viterbi circuit, third upstream memory means UM, an Inverse-Fast-Transform-Transform circuit IFFT, fourth upstream memory means and a Transmit Digital Signal Processor Front End Tx_DSP_FE. Such a known DSL device will not be described in more detail hereafter because it is not the subject of the present invention and many specifications thereof are easy to find in specialized literature.

Although applicable to most of the memory means of any DSL device, the following part of the specification will take as an example the second downstream memory means or memory DM and the third upstream memory means or memory UM to describe the invention in a VDSL environment.

As already mentioned, in the known VDSL device the memory DM is located between the Fast-Transform-Transform circuit FFT and the Demapper/ Viterbi circuit, and is used as interface to latch downstream data transferred between these two circuits. Similarly, the memory UM is located between the Mapper/ Viterbi circuit and the Inverse-Fast-Transform-Transform circuit IFFT, and is used as interface to latch upstream data transferred between these two circuits. In the known DSL device shown at Fig. 1, the memories DM and UM are distinct devices.

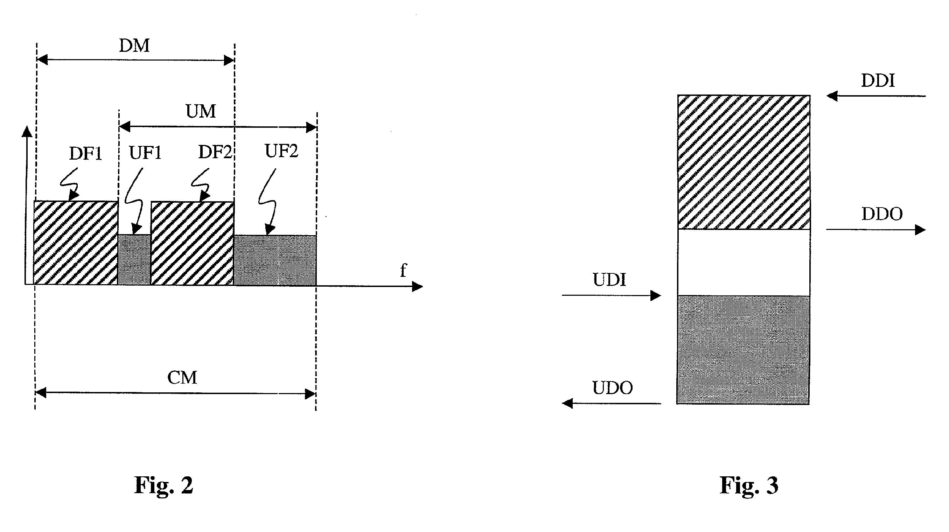

The frequencies of the downstream data are distributed over two frequency ranges or bands represented by the hashed boxes DF1 and DF2 at Fig. 2. Each box corresponds for instance to 2048 carriers of 16 bits at 4KHz, which leads to a memory DM of 2048 x 16 = 32 Kbits. The frequencies of the upstream data belong either to one or to two frequency ranges UF1, UF2 according to the fact that, for instance, a VDSL or a VDSL+ standardized protocol is used. The standardization further requires that the frequency range UF1 of the upstream data is located between the above two frequency ranges DF1, DF2 of the downstream data. The second frequency range UF2, if any, of the upstream data is then located above the second or highest frequency range DF2 of the downstream data.

As a result, both the memories DM and UM need to have a capacity of 32 Kbits, i.e. in total a memory storage capacity of 64 Kbits (DM + UM). Because the downstream and the upstream frequencies are non-overlapping, the present invention proposes to replace the two memories DM and UM of 32 Kbits each, i.e. 64 Kbits in total, by only one combined or common memory CM of 44.8 Kbits (= 2800 carriers x 16 bits). However, the combined or common memory CM is slightly larger than one of the memories UM or DM: 2800 carriers instead of 2048 carriers.

The common memory CM is shared by the processors of the upstream and downstream paths. In the present example and as shown at Fig. 3, the common memory CM is for instance shared between:
- the Fast-Transform-Transform circuit FFT of which an output is connected to a first input DDI of the common memory CM;
- the Demapper/ Viterbi circuit of which an input is connected to a first output DDO of CM;
- the Mapper/ Viterbi circuit of which an output is connected to a second input UDI of CM; and
- the Inverse-Fast-Transform-Transform circuit IFFT of which an input is connected to a second output UDO of CM.

Also in the time domain, the delay shift between upstream data and downstream data allows the use of the common memory CM. As shown at Fig. 3, one end of the common memory CM is used for downstream data, whilst the other end of CM is used for upstream data. In more detail, the first input DDI for the downstream data points at one end of the common memory CM, whilst the second output UDA for the upstream data points at the other end of CM.

It is to be noted that, although explained for the above second downstream memory means DM and third upstream memory means UM, the replacement of two memories by a single common memory of smaller size is applicable to most of the memory means of any DSL device. This is even valid for an ADSL device where the gain is however not so dramatic as for VDSL devices.

Although in the above example of realization of the invention, the first path has been described as being the downstream path and the second path as being the upstream path, the reciprocity is also possible.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A Digital Subscriber Line [DSL] telecommunication device with a first path for transferring data in a first direction and a second path for transferring data in a second direction opposite to said first direction,
said telecommunication device being adapted to operate according to a frequency spectra comprising a plurality of ranges of frequencies (DF1, DF2) for said first data transferred in said first direction and at least one range of frequencies (UF1, UF2) for said second data transferred in said second direction, two distinct ranges of frequencies for first data being separated by a range of frequencies for second data, and
said telecommunication device including memory means (UM, DM) interfacing circuits of said paths and used to latch data during their transfer between said circuits,
***characterized in that*** said telecommunication device comprises a common memory (CM) adapted both to store first data transferred between circuits of said first path and to store second data transferred between circuits of said second path.

2. The Digital Subscriber Line telecommunication device according to claim 1, **characterized in that** said common memory (CM) is shared by circuits of said first path and by corresponding circuits of said second path.

3. The Digital Subscriber Line telecommunication device according to claim 1, **characterized in that** said Digital Subscriber Line telecommunication device comprises a plurality of common memories (CM), each common memory of said plurality interfacing two circuits of said first path and two corresponding circuits of said second path.

4. The Digital Subscriber Line telecommunication device according to claim 2, **characterized in that** said first path is a downstream path and **in that** said second path is an upstream path.

5. The Digital Subscriber Line telecommunication device according to claim 4, **characterized in that** said common memory (CM)
has a first input (DDI) connected to an output of a first circuit of said downstream path,
has a first output (DDO) connected to an input of a second circuit of said downstream path,
has a second input (UDI) connected to an output of a third circuit of said upstream path, and
has a second output (UDO) connected to an input of a fourth circuit of said upstream path.

6. The Digital Subscriber Line telecommunication device according to claim 5, **characterized in that** said first input (DDI) and said second output (UDO) are associated to distinct ends of said common memory (CM).

7. The Digital Subscriber Line telecommunication device according to claim 2, **characterized in that** said circuits are processors.

8. The Digital Subscriber Line telecommunication device according to claim 4, **characterized in that** said common memory (CM)
has a first input (DDI) connected to an output of a Fast-Transform-Transform circuit (FFT) of said downstream path,
has a first output (DDO) connected to an input of a Demapper circuit of said downstream path,
has a second input (UDI) connected to an output of a Mapper circuit of said upstream path, and
has a second output (UDO) connected to an input of an Inverse-Fast-Transform-Transform circuit (IFFT) of said upstream path.

9. The Digital Subscriber Line telecommunication device according to claim 1, **characterized in that** said telecommunication device operates according to the Very High Speed Digital Subscriber Line [VDSL] protocol.
